# EUROPEAN PATENT SPECIFICATION

(11) **EP 2 301 818 B1**
(45) Date of publication and mention of the grant of the patent: **12.03.2014**
(21) Application number: 10176604.6
(22) Date of filing: 14.09.2010
(51) Int. Cl.: B60W 30/18, B60W 10/02, B60W 10/06

(54) **Automatic stop and start control system for internal combustion engine**
Automatisches Stopp- und Startkontrollsystem für Verbrennungsmotor
Système de commande de démarrage et d'arrêt automatique pour moteur à combustion interne

(30) Priority: 25.09.2009 JP 2009220306
(43) Date of publication of application: 30.03.2011
(73) Proprietor: AISIN SEIKI KABUSHIKI KAISHA, Kariya-shi, Aichi 448-8650 (JP)
(72) Inventor: Hattori, Yasuaki, Kariya-shi Aichi 448-8650 (JP); Mase, Atsuhiro, Kariya-shi Aichi 448-8650 (JP)
(74) Representative: Kramer - Barske - Schmidtchen

(56) References cited:
- EP-A1- 0 136 267
- EP-A2- 1 764 278
- EP-A2- 1 777 431
- FR-A1- 2 812 919

## Description

### TECHNICAL FIELD

This disclosure relates to an automatic stop and start control system for an internal combustion engine. More particularly, this disclosure pertains to an automatic stop and start control system for an internal combustion engine which controls the internal combustion engine that is rotating to automatically stop in a case where a stop condition is satisfied and controls the internal combustion engine that is stopped to automatically start in a case where a start condition is satisfied.

### BACKGROUND DISCUSSION

In response to a recent increasing awareness of environmental issues and exhaust emission regulations, a vehicle may be equipped with an automatic stop and start control system having an idling stop function for automatically stopping an internal combustion engine when the vehicle is stopped and automatically starting the internal combustion engine when the vehicle is started. According to the automatic stop and start control system mounted to a manual transmission vehicle, in a case where a shift position (gear position) of the transmission is in a driving range and thus a clutch is in an engagement state (i.e., the internal combustion engine and driving wheels are directly connected), the internal combustion engine cannot be started by a starter motor because of a large inertia of rotational members constituting the clutch. Therefore, the shift position of the transmission in the neutral range is an automatic stop condition of the internal combustion engine to thereby prevent the inertia of the rotational members from increasing at a time of the restart of the internal combustion engine.

For example, an automatic stop and start control system disclosed in JP2002-188480A includes a controlling means determining an automatic stop condition and an automatic start condition of an engine that is mounted to a vehicle and that is connected to a transmission via a clutch. The controlling means controls the engine to automatically stop when the automatic stop condition is satisfied during the operation of the engine and controls the engine to automatically start when the automatic start condition is satisfied while the engine is in the automatically stopped state. The automatic stop condition is satisfied in a case where all requirements that a vehicle speed is equal to or smaller than a predetermined value excluding zero, an idling switch is turned on, and a shift position (i.e., a gear position) of the transmission is in the neutral range are achieved. The automatic start condition is satisfied in a case where at least one of requirements that the clutch is shifting from an engagement state or a half-engagement state to a disengagement state, the gear position is in a range other than the neutral range, the idling switch is turned off, and a booster negative pressure is in a predetermined state is achieved.

However, according to the automatic stop and start control system disclosed in JP2002-188480A, when the clutch is not operated and the shift position is in the driving range, i.e., not in the neutral range, the internal combustion engine is prevented from automatically starting, which fails to obtain an improvement of fuel efficiency.

FR 2 812 919 A1 discloses an automatic stop and start control system for an internal combustion engine mounted at a vehicle where a clutch is arranged at a power transmission passage between a transmission and an internal combustion engine that is driven on a basis of an operation of an acceleration pedal, the automatic stop and start control system for the internal combustion engine comprising: a controlling portion controlling the internal combustion engine that is rotating to automatically stop and controlling the internal combustion engine that is stopped to automatically start, the stop condition being satisfied in a case where a first speed of the transmission is engaged and the clutch is disengaged or in a case where the transmission is at neutral, the controlling portion controlling a clutch actuator provided separately from a clutch pedal that operates the clutch to bring the clutch in a disconnection state in a case where a shift position of the transmission is in a neutral range and the clutch is in a connection state after the internal combustion engine is automatically stopped.

EP 1 777 431 A2 discloses the disengagement of the clutch by an independent actuator under a predetermined vehicle speed irrespective of gearshift or clutch position. However, the system according to this disclosure does not stop the engine.

A need thus exists for an automatic stop and start control system for an internal combustion engine that improves fuel efficiency and that achieves an automatic stop of the internal combustion engine regardless of a clutch operation and a shift position of a transmission in a manual transmission vehicle.

### SUMMARY

According to the invention, an automatic stop and start control system for an internal combustion engine mounted at a vehicle where a clutch is arranged at a power transmission passage between a transmission and an internal combustion engine that is driven on a basis of an operation of an acceleration pedal, the automatic stop and start control system for the internal combustion engine includes a controlling portion controlling the internal combustion engine that is rotating to automatically stop and controlling the internal combustion engine that is stopped to automatically start. The stop condition is satisfied in a case where a speed of the vehicle or a speed of the internal combustion engine is equal to or smaller than a predetermined threshold value that is greater than zero and the acceleration pedal is not depressed. The controlling portion controls a clutch actuator provided separately from a clutch pedal that operates the clutch to bring the clutch in a disconnection state in a case where a shift position of the transmission is in a driving range and the clutch is in a connection state after the internal combustion engine is automatically stopped.

The start condition may be satisfied in a case where the shift position of the transmission is in the driving range and the clutch pedal is shifting from a disengagement state to an engagement state after the internal combustion engine is automatically stopped.

The start condition may be satisfied in a case where the shift position of the transmission is in the driving range, the clutch is in the disconnection state, and the acceleration pedal is depressed.

The start condition may be satisfied in a case where the shift position of the transmission is in the driving range, the clutch is in the disconnection state, the acceleration pedal is not depressed, and a braking of the vehicle is shifting from a braking state to a release state.

The automatic stop and start control system for the internal combustion engine may further include an operation passage between the clutch and the clutch actuator to transmit an operational force of the clutch actuator to the clutch. The operation passage is prevented from being provided between the clutch and the clutch pedal for transmitting an operational force of the clutch pedal to the clutch.

The automatic stop and start control system for the internal combustion engine may further include an operation passage between the clutch and the clutch actuator to transmit an operational force of the clutch actuator to the clutch and an operation passage between the clutch and the clutch pedal to transmit an operational force of the clutch pedal to the clutch. The clutch is operated on a basis of the operational force of either the clutch actuator or the clutch pedal whichever operates the clutch further in a disengagement state.

The automatic stop and start control system for the internal combustion engine may further include a switching device that switches between operation passages to transmit an operational force of either the clutch pedal or the clutch actuator to the clutch. The switching device connects the clutch pedal to the clutch in a case where a power supply of the clutch actuator is turned off and connects the clutch actuator to the clutch in a case where the power supply of the clutch actuator is turned on.

According to the aforementioned disclosure, regardless of the gear shift operation and the clutch operation by the driver of the vehicle, the internal combustion engine can be stopped, thereby improving fuel consumption. Specifically, even when the speed of the internal combustion engine decreases to a point where the internal combustion engine returns from a fuel cut mode, the internal combustion engine can be maintained to be stopped, thereby improving the fuel consumption. In addition, even when the vehicle is stopped while the clutch pedal is in the engagement state, the transmission of the rotational torque from the internal combustion engine to the transmission is interfered by the clutch actuator, thereby preventing an engine from stalling. Further, even when the clutch pedal is not operated at the start of the vehicle, the transmission of the rotational torque is automatically adjustable at the clutch by means of the clutch actuator, thereby assisting the start of the vehicle. Specifically, even when the operation of the clutch pedal causes a sudden connection of the clutch, a rapid start of the vehicle is prevented. In addition, a beginner driver of the manual transmission vehicle may be assisted accordingly.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a diagram illustrating a structure of an automatic stop and start control system for an internal combustion engine according to a first embodiment disclosed here;

Fig. 2 is a flowchart schematically illustrating an operation of the automatic stop and start control system for the internal combustion engine according to the first embodiment;

Fig. 3 is a time chart illustrating the operation of the automatic stop and start control system for the internal combustion engine after an automatic stop of the internal combustion engine to a re-acceleration thereof in a case where a shift position of a transmission is constantly positioned in a driving range and a clutch pedal is operated;

Fig. 4 is a time chart illustrating the operation of the automatic stop and start control system for the internal combustion engine after the automatic stop of the internal combustion engine to the re-acceleration thereof in a case where the shift position of the transmission is constantly positioned in the driving range and the clutch pedal is not operated;

Fig. 5 is a diagram illustrating the structure of the automatic stop and start control system for the internal combustion engine according to a second embodiment disclosed here;

Fig. 6 is a flowchart schematically illustrating the operation of the automatic stop and start control system for the internal combustion engine according to the second embodiment;

Fig. 7 is a diagram illustrating the structure of the automatic stop and start control system for the internal combustion engine according to a third embodiment disclosed here;

Fig. 8 is a flowchart schematically illustrating the operation of the automatic stop and start control system for the internal combustion engine according to the third embodiment;

Fig. 9 is a diagram illustrating the structure of the automatic stop and start control system for the internal combustion engine according to a fourth embodiment disclosed here;

Fig. 10 is a flowchart schematically illustrating the operation of the automatic stop and start control system for the internal combustion engine according to the fourth embodiment;

Fig. 11 is a diagram illustrating the structure of the automatic stop and start control system for the internal combustion engine according to a fifth embodiment disclosed here;

Fig. 12 is a flowchart schematically illustrating the operation of the automatic stop and start control system for the internal combustion engine according to the fifth embodiment;

Fig. 13 is a diagram illustrating the structure of the automatic stop and start control system for the internal combustion engine according to a sixth embodiment disclosed here; and

Fig. 14 is a flowchart schematically illustrating the operation of the automatic stop and start control system for the internal combustion engine according to the sixth embodiment.

### DETAILED DESCRIPTION

Embodiments will be explained with reference to the attached drawings. An automatic stop and start control system for an internal combustion engine according to each of the embodiments is mounted to a vehicle where a clutch is arranged at a power transmission passage between the internal combustion engine and a transmission. The automatic stop and start control system for the internal combustion engine controls the internal combustion engine that is rotating to automatically stop in a case where a stop condition is satisfied and controls the internal combustion engine that is stopped to automatically start in a case where a start condition is satisfied. The stop condition is satisfied when a vehicle speed or a speed of the internal combustion engine is equal to or smaller than a predetermined value that is grater than zero and an acceleration pedal is not depressed. After the automatic stop of the internal combustion engine, in order to control the clutch in a disconnection state when a shift position of the transmission is in a driving range and the clutch is in a connection state, the automatic stop and start control system controls a clutch actuator that is separately provided from a clutch pedal for operating the clutch to be in the connection state and the disconnection state.

### [First embodiment]

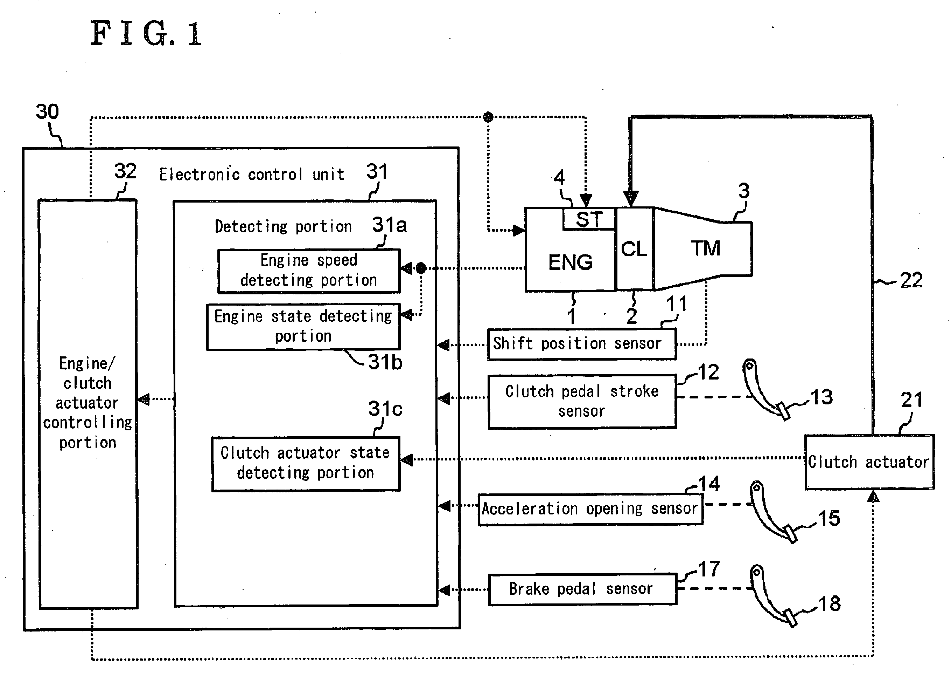

The automatic stop and start control system for the internal combustion engine according to a first embodiment will be explained with reference to Fig. 1. Fig. 1 is a diagram illustrating a structure of the automatic stop and start control system for the internal combustion engine according to the first embodiment.

The automatic stop and start control system for an internal combustion engine, which is mounted to a vehicle where a clutch 2 is arranged at a power transmission passage between an engine 1 serving as the internal combustion engine and a transmission 3, controls the engine 1 that is rotating to automatically stop when a stop condition is satisfied and controls the engine 1 that is stopped to automatically start when a start condition is satisfied. The automatic stop and start control system for the internal combustion engine includes an electronic control unit 30 serving as a controlling portion that controls the engine 1, a starter motor 4 starting the engine 1, and a clutch actuator 21 operating the clutch 2, depending on various conditions of the vehicle. The automatic stop and start control system for the internal combustion engine further includes a clutch operation passage 22, which will be explained later, serving as an operation passage. The vehicle equipped with the automatic stop and start control system for the internal combustion engine includes, as main structures, the engine 1, the clutch 2, the transmission 3, the starter motor 4, a shift position sensor 11, a clutch pedal stroke sensor 12, a clutch pedal 13, an acceleration opening sensor 14, an acceleration pedal 15, the clutch actuator 21, the clutch operation passage 22, and the electronic control unit 30.

The engine 1 is the internal combustion engine outputting a rotational power by means of combustion of fuel (for example, hydrocarbon system such as gasoline and light fuel oil). The engine 1 is started by a driving of the starter motor 4. The rotational power of the engine 1 is transmitted to the clutch 2. The engine 1 includes various sensors such as an engine speed sensor, an actuator for driving an injector, a throttle valve, and the like, an ignition device, and the like. The engine 1 is connected to the electronic control unit 30 so that a communication therebetween is available and is controlled by the electronic control unit 30.

The clutch 2 is arranged at the power transmission passage between the engine 1 and the transmission 3. The clutch 2 connects or disconnects the rotational power of the engine 1 relative to the transmission 3. The clutch 2 is brought in the connection state or the disconnection state by the clutch actuator 21 via the clutch operation passage 22.

The transmission 3 includes a gear mechanism that changes a speed of the rotational power input from the engine 1 via the clutch 2 and that outputs the resulting rotational power to driving wheels. A gear range of the transmission 3 is changeable by a manual operation or an automatic operation. The transmission 3 is a parallel axis gear type transmission having five forward stages and one backward stage, for example. The transmission 3 includes multiple speed change gear trains.

The starter motor 4 is an electrical motor that drives and starts the engine 1. The starter motor 4 is connected to the electronic control unit 30 so that a communication therebetween is available and is controlled by the electronic control unit 30.

The shift position sensor 11 detects a shift position (i.e., a gear range) of the transmission 3 (or a position of a shift lever provided at a driver seat). The shift position sensor 11 is electrically connected to the electronic control unit 30.

The clutch pedal stroke sensor 12 detects a position of the clutch pedal 13 (which corresponds to a stroke of the clutch pedal 13) provided at the driver seat. The clutch pedal stroke sensor 12 is electrically connected to the electronic control unit 30.

The clutch pedal 13 is a step-in type pedal provided for bringing the clutch 2 in the connection state or the disconnection state. The clutch pedal 13 is provided in the vicinity of feet of the driver seated on the driver seat.

The acceleration opening sensor 14 is a sensor such as a stroke sensor and an angle sensor that detects an amount of depression (which corresponds to an acceleration opening) of the acceleration pedal 15 at the driver seat. The acceleration opening sensor 14 is electrically connected to the electronic control unit 30.

The acceleration pedal 15 is a step-in type pedal for accelerating the engine 1. The acceleration pedal 15 is provided in the vicinity of feet of the driver seated on the driver seat.

A brake pedal sensor 17 detects a position of a brake pedal 18 (which corresponds to a stroke thereof) provided at the driver seat. The brake pedal sensor 17 is electrically connected to the electronic control unit 30.

The brake pedal 18 is a step-in type pedal for performing a braking operation and is provided in the vicinity of feet of the driver seated on the driver seat.

The clutch actuator 21 operates the clutch 2 in the connection state or the disconnection state via the clutch operation passage 22. The clutch actuator 21 includes an electrical motor serving as a driving source, and a sensor detecting an operation state of the clutch 2 (a stroke sensor, an angle, sensor, and the like). The clutch actuator 21 is connected to the electronic control unit 30 so that a communication therebetween is available and is controlled by the electronic control unit 30.

The clutch operation passage 22 is a passage (i.e., a mechanism or an oil passage) transmitting an operational force of the clutch actuator 21 to the clutch 2.

The electronic control unit 30 is a computer for controlling the engine 1, the starter motor 4, and the clutch actuator 21 based on a program. Various sensors, an actuator incorporated within the engine 1 (for example, an actuator driving an injector and a throttle valve), an ignition device, the starter motor 4, and the electrical motor of the clutch actuator 21 are electrically connected to the electronic control unit 30. The aforementioned various sensors include a sensor incorporated within the engine 1 (for example, an engine speed sensor), the shift position sensor 11, the clutch pedal stroke sensor 12, the acceleration opening sensor 14, the brake pedal sensor 17, and the sensor incorporated within the clutch actuator 21 (for example, a stroke sensor and an angle sensor). The electronic control unit 30 executes the program to thereby achieve a detecting portion 31 and an engine/clutch actuator controlling portion 32.

The detecting portion 31 detects a state of a vehicle and includes an engine speed detecting portion 31a, an engine state detecting portion 31b, and a clutch actuator state detecting portion 31c. The engine speed detecting portion 31a detects the speed of the engine 1 (i.e., engine speed) based on a signal sent from the engine 1. The engine state detecting portion 31b detects an operation state of the engine 1 (i.e., ON/OFF state) based on a signal sent from the engine 1. The clutch actuator state detecting portion 31 c detects an operation state of the clutch actuator 21 based on a signal sent from the clutch actuator 21. The detecting portion 31 detects the shift position of the transmission 3 based on a signal from the shift position sensor 11, the stroke of the clutch pedal 13 based on a signal from the clutch pedal stroke sensor 12, the acceleration opening based on a signal from the acceleration opening sensor 14, and the stroke of the brake pedal 18 based on a signal from the brake pedal sensor 17. The detecting portion 31 outputs information related to the detected state of the vehicle to the engine/clutch actuator controlling portion 32.

The engine/clutch actuator controlling portion 32 performs information processing based on information related to the state of the vehicle transmitted from the detecting portion 31. The engine/clutch actuator controlling portion 32 then outputs a control signal based on the aforementioned information processing to the engine 1, the starter motor 4, and the clutch actuator 21. The engine/clutch actuator controlling portion 32 controls the engine 1 to stop automatically in a case where the acceleration pedal 15 is not depressed and the engine speed is equal to or smaller than a predetermined value (which is greater than zero). After the engine 1 stops, in a case where the engine 1 is directly connected to the driving wheels (i.e., the shift position of the transmission 3 is in the driving range and the clutch pedal 13 is not depressed), the engine/clutch actuator controlling portion 32 controls the clutch actuator 21 so that the clutch 2 is brought in the disconnection state from the connection state for the purpose of preparing for the restart of the engine 1.

The electronic control unit 30 obtains information of the engine 1 related to the state of the vehicle necessary for the control such as the acceleration opening and the engine speed and then performs a calculation based on the program specified beforehand. The electronic control unit 30 controls the actuator for the injector and the igniter, and the ignition device incorporated within the engine 1.

The electronic control unit 30 obtains information of the clutch 2 related to the state of the vehicle necessary for the control such as the clutch actuator stroke, the clutch pedal stroke, and the shift position and performs a calculation based on the program specified beforehand, thereby controlling the clutch actuator 21.

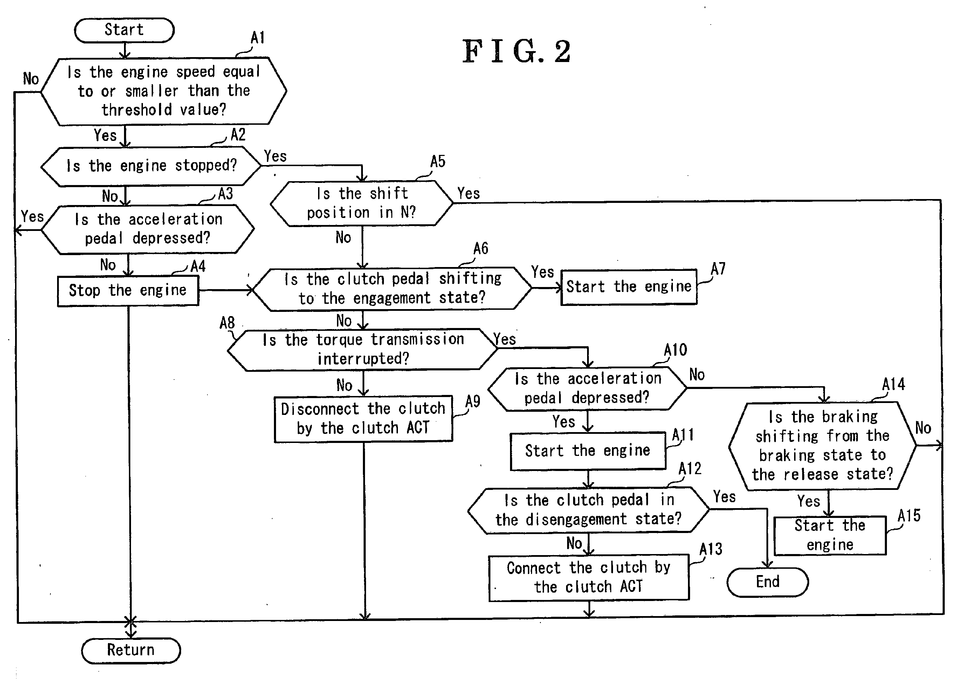

Next, an operation of the automatic stop and start control system for the internal combustion engine according to the first embodiment will be explained with reference to Fig. 2. Fig. 2 is a flowchart schematically illustrating the operation of the automatic stop and start control system for the internal combustion engine according to the first embodiment.

The electronic control unit 30 determines whether or not the detected engine speed is equal to or smaller than the predetermined value (which is grater than zero) in step A1. In a case where the detected engine speed is greater than the predetermined value, a flow operation returns to step A1 (i.e., a flow operation repeats A1). The threshold value is desirably defined to be a value at which the engine 1 returns from a fuel cut mode (where an amount of fuel injection is zero) (i.e., the engine 1 is supplied with fuel).

In a case where the engine speed is equal to or smaller than the predetermined value (Yes in step A1), the electronic control unit 30 then determines whether or not the detected state of the engine 1 indicates that the engine 1 is stopped in step A2. In a case where it is determined that the engine 1 is stopped, the flow operation proceeds to step A5.

In a case where it is determined that the engine 1 is not stopped, the electronic control unit 30 determines whether or not the acceleration pedal 15 is depressed in step A3. When the acceleration pedal 15 is depressed, the flow operation returns to step A1.

In a case where the acceleration pedal 15 is not depressed, the electronic control unit 30 controls the engine 1 to stop in step A4. After the engine 1 stops, the flow operation returns to step A1.

In a case where the engine 1 is stopped (Yes in step A2), the electronic control unit 30 determines whether or not the detected shift position of the transmission 3 is in the neutral range in step A5. In a case where the shift position is in the neutral range, the flow operation returns to A1.

In a case where the shift position is not in the neutral range, the electronic control unit 30 determines whether or not the clutch pedal 13 is shifting from a disengagement state to an engagement state based on the detected stroke of the clutch pedal 13 (i.e., the clutch pedal stroke) in step A6. In a case where the clutch pedal 13 is not shifting to the engagement state (No in step A6; the clutch pedal 13 is maintained in the disengagement state or in the engagement state), the flow operation proceeds to step A8.

In a case where the clutch pedal 13 is shifting to the engagement state (Yes in step A6), the electronic control unit 30 controls the engine 1 and the starter motor 4 so as to start the engine 1 in step A7. After the start of the engine 1, the flow operation is terminated.

In a case where the clutch pedal 13 is not shifting to the engagement state (No, in step A6), the electronic control unit 30 determines, on a basis of the detected clutch pedal stroke, whether or not a transmission of a rotational torque from the engine 1 to the transmission 3 is interfered by the clutch 2 in step A8. When the transmission of the rotational torque is interfered by the clutch 2, the flow operation proceeds to step A10.

In a case where the transmission of the rotational torque is not interfered by the clutch 2 (No in step A8), the electronic control unit 30 controls the clutch actuator 21 so that the clutch 2 is brought in the disconnection state in step A9. After the clutch 2 is brought in the disconnection state, the flow operation returns to step A1.

In a case where the transmission of the rotational torque is interfered by the clutch 2 (Yes in step A8), the electronic control unit 30 determines whether or not the acceleration pedal 15 is depressed in step A10. In a case where the acceleration pedal 15 is not depressed, the flow operation proceeds to step A14.

In a case where the acceleration pedal 15 is depressed, the electronic control unit 30 controls the engine 1 and the starter motor 4 so as to start the engine 1 in step A11.

After the operation in step A11, the electronic control unit 30 determines whether or not the clutch pedal 13 is in the disengagement state in step A12. When the clutch pedal 13 is in the disengagement state, the flow operation is terminated.

When the clutch pedal 13 is not in the disengagement state, the electronic control unit 30 controls the clutch actuator 21 so that the clutch 2 is brought in the connection state from the disconnection state in step A13. After the clutch 2 is brought in the connection state, the flow operation returns to step A1.

In a case where the acceleration pedal 15 is not depressed (No in step A10), the electronic control unit 30 determines whether or not the brake pedal 18 is operated from an ON state to an OFF state (i.e., a braking of the vehicle is shifting from a braking state to a release state) in step A14. When the braking of the vehicle is not shifting from the braking state to the release state, the flow operation returns to step A1.

In a case where the braking of the vehicle is shifting from the braking state to the release state (Yes in step A14), the electronic control unit 30 controls the engine 1 and the starter motor 4 so as to start the engine 1 in step A15. After the start of the engine 1, the flow operation is terminated.

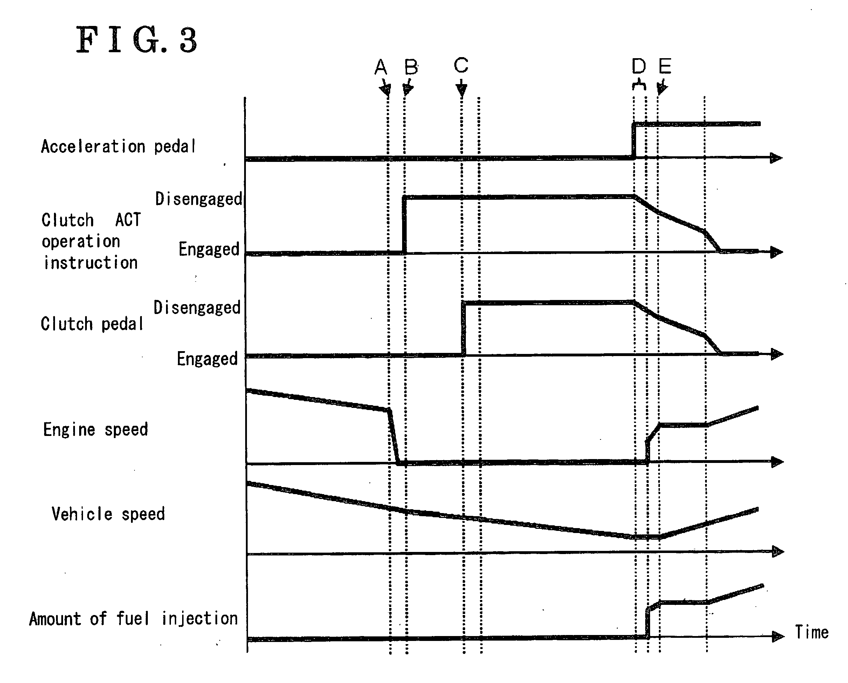

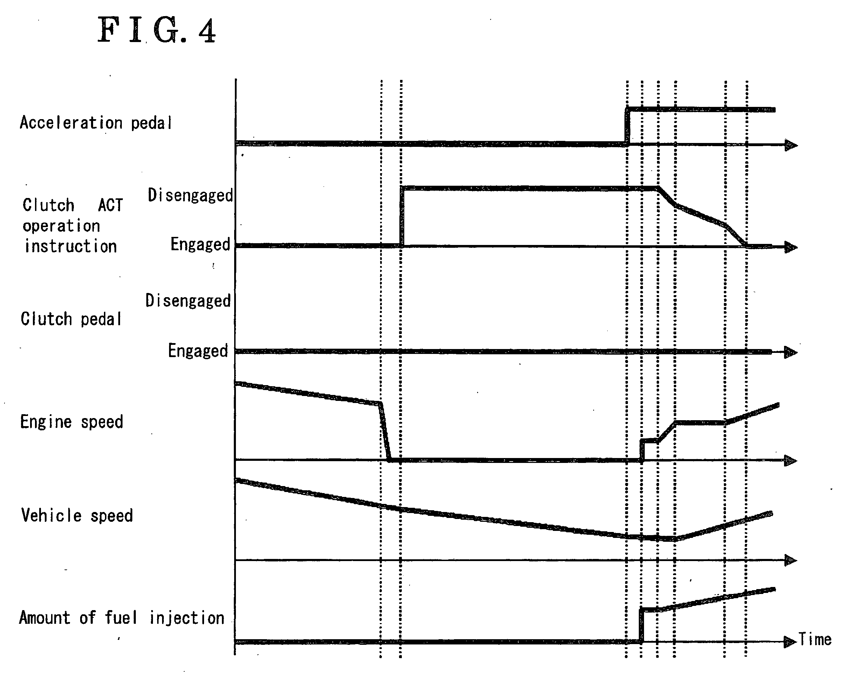

Next, an example of the operation of the automatic stop and start control system for the internal combustion engine according to the first embodiment will be explained with reference to Fig. 3. Fig. 3 is a time chart illustrating the operation of the automatic stop and start control system for the internal combustion engine according to the first embodiment after an automatic stop of the engine 1 to a re-acceleration thereof in a case where the shift position of the transmission 3 is constantly positioned in the driving range and the clutch pedal 13 is operated. Fig. 4 is a time chart illustrating the operation of the automatic stop and start control system for the internal combustion engine according to the first embodiment after the automatic stop of the engine 1 to the re-acceleration thereof in a case where the shift position of the transmission 3 is constantly positioned in the driving range and the clutch pedal 13 is not operated.

At time A in Fig. 3, in a case where the vehicle speed decreases and thus the engine speed decreases to a point where the engine 1 returns from the fuel cut mode (where the amount of fuel injection is zero) (i.e., fuel is supplied), the point corresponding to the predetermined value in step A1 in Fig. 2, the flow operation proceeds to A2 from A1. At this time, the engine 1 is not yet stopped (No in step A2) and the acceleration pedal 15 is not depressed (No in step A3). Therefore, the engine 1 is stopped in step A4.

At time B in Fig. 3, after the engine 1 stops, the flow operation returns to step A1 (Yes) and proceeds to step A2 (Yes) and then step A5. At this time, because the clutch pedal 13 is not depressed (not operated), the clutch 2 is in the connection state and the shift position of the transmission 3 is in the driving range. The engine 1 is directly connected to the driving wheels accordingly. Thus, the flow operation proceeds to step A5 (No), step A6 (No), step A8 (No) and step A9 where the clutch 2 is brought in the disconnection state by means of the operation of the clutch actuator 21.

At time C in Fig. 3, after the clutch 2 is brought in the disconnection state by the operation of the clutch actuator 21, the flow operation returns to step A1 (Yes) and proceeds to step A2 (Yes) and step A5. At this time, the clutch pedal 13 is depressed (i.e., shifting from the engagement state to the disengagement state) so as to bring the clutch 2 in the disconnection state. The shift position is in the driving range and the acceleration pedal 15 is not depressed. Thus, the flow operation proceeds to step A5 (No), step A6 (No), step A8 (Yes) and step A10 (No). At time C, the operation of the clutch pedal 13 is synchronized with the operation of the clutch actuator 21 and thereafter the clutch actuator 21 is operated in response to the operation of the clutch pedal 13.

At time D in Fig. 3, the acceleration pedal 15 is depressed and the flow operation proceeds to step A1 (Yes), step A2 (Yes), step A5 (No), step A6 (No), step A8 (Yes), step A10 (Yes), and step A11 where the engine 1 is restarted. In a case where timing of the start of the engagement of the clutch pedal 13 is faster than that of the depression of the acceleration pedal 15, the flow operation proceeds to step A1 (Yes), step A2 (Yes), step A5 (No), step A6 (Yes) and step A7 where the engine 1 is restarted.

At time E in Fig. 3, because the engine 1 is restarted, the vehicle is re-accelerated by the connection of the clutch 2 caused by a driver of the vehicle.

As illustrated in Fig. 4, in a case where the clutch pedal 13 is not operated, the clutch 2 is in the disconnection state by the clutch actuator 21 after the stop of the engine 1 to the restart thereof. Then, because of the depression of the acceleration pedal 15, the flow operation proceeds to step A1 (Yes), step A2 (Yes), step A5 (No), step A6 (No), step A8 (Yes), step A10 (Yes) and step A11 where the engine 1 is restarted. The clutch actuator 21 is operated to bring the clutch 2 in the connection state to thereby start the acceleration of the vehicle again.

According to the first embodiment, regardless of the gear shift operation and the clutch operation by the driver of the vehicle, the engine 1 can be stopped, thereby improving fuel consumption. Specifically, even when the engine speed decreases to the point where the engine 1 returns from the fuel cut mode, the engine 1 can be maintained to be stopped, thereby improving the fuel consumption.

In addition, according to the first embodiment, even when the vehicle is stopped while the clutch pedal 13 is in the engagement state, the transmission of the rotational torque from the engine 1 to the transmission 3 is interfered by the clutch actuator 21, thereby preventing the engine from stalling.

Further, according to the first embodiment, even when the clutch pedal 13 is not operated at the start of the vehicle, the transmission of the rotational torque is automatically adjustable at the clutch 2 by means of the clutch actuator 21, thereby assisting the start of the vehicle. Specifically, even when the operation of the clutch pedal 13 causes a sudden connection of the clutch 2, a rapid start of the vehicle is prevented. In addition, a beginner driver of the manual transmission vehicle may be assisted accordingly.

[Second embodiment]

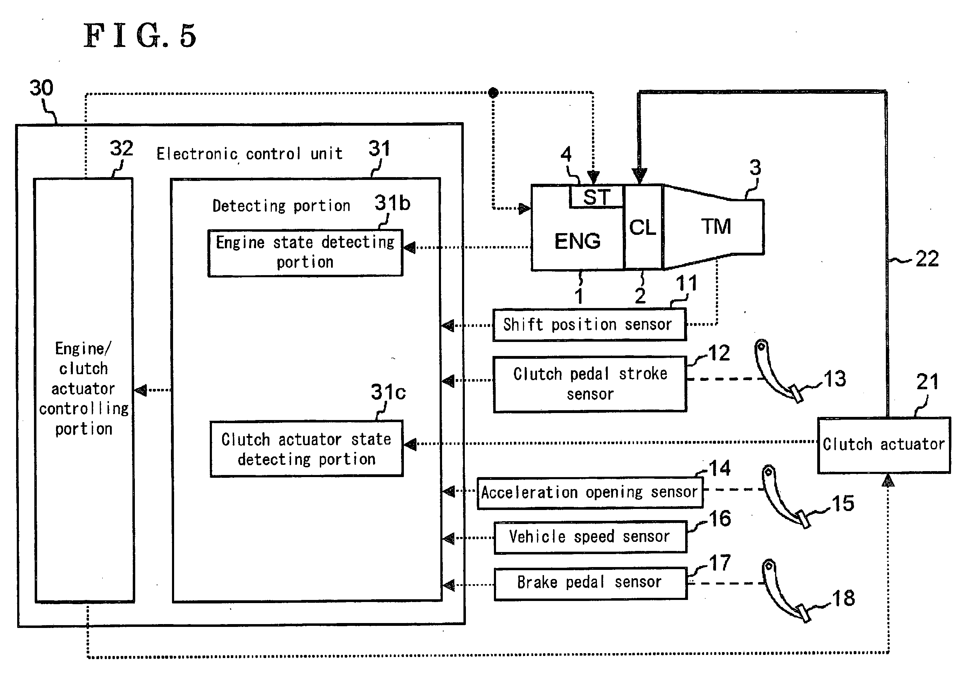

The automatic stop and start control system for the internal combustion engine according to a second embodiment will be explained with reference to Fig. 5. Fig. 5 is a diagram schematically illustrating a structure of the automatic stop and start control system for the internal combustion engine according to the second embodiment.

According to the second embodiment that is a modification of the first embodiment, a vehicle speed is utilized instead of the engine speed. That is, in the second embodiment, the detecting portion 31 does not include the engine speed detecting portion. Instead, the detecting portion 31 detects the vehicle speed based on a signal from a vehicle speed sensor 16 and the engine/clutch actuator controlling portion 32 performs information processing based on information related to the vehicle speed. The vehicle speed sensor 16, which detects the speed of the vehicle, is electrically connected to the electronic control unit 30. Other structures of the second embodiment are the same as those of the first embodiment.

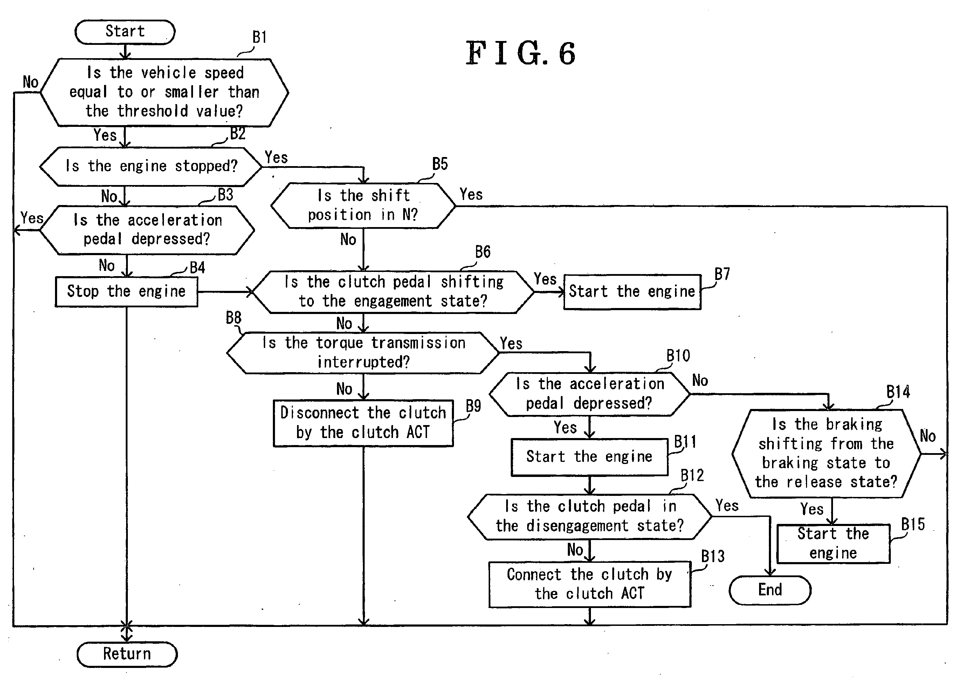

Next, an operation of the automatic stop and start control system for the internal combustion engine according to the second embodiment will be explained with reference to Fig. 6. Fig. 6 is a flowchart schematically illustrating an operation of the automatic stop and start control system for the internal combustion engine according to the second embodiment.

First, the electronic control unit 30 determines whether or not the detected vehicle speed is equal to or smaller than a predetermined threshold value in step B1. In a case where the vehicle speed is greater than the threshold value (No in step B1), the flow operation returns to step B1 (i.e., the flow operation repeats step B1). The threshold value is desirably defined to be a value at which the engine 1 returns from the fuel cut mode (where the amount of fuel injection is zero) (i.e., the engine 1 is supplied with fuel).

In a case where the vehicle speed is equal to or smaller than the threshold value, operations thereafter from step B2 to step B15 are the same as those from step A2 to step A15 in Fig. 2.

According to the second embodiment, the same effect as that of the first embodiment may be obtained.

### [Third embodiment]

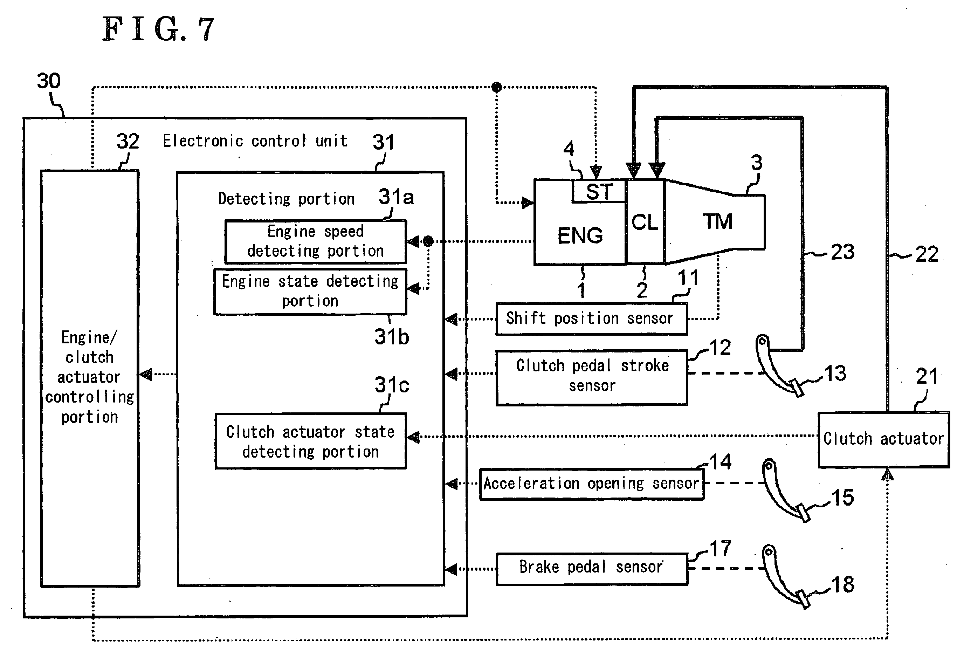

The automatic stop and start control system for the internal combustion engine according to a third embodiment will be explained with reference to Fig. 7. Fig. 7 is a schematic view illustrating a structure of the automatic stop and start control system for the internal combustion engine according to the third embodiment.

The third embodiment that is a modification of the first embodiment includes a clutch operation passage 23 serving as an operation passage through which the clutch 2 is operable by the clutch pedal 13 in addition to the clutch operation passage 22 through which the clutch 2 is operable by the clutch actuator 21. The clutch operation passage 23 is a passage (i.e., a mechanism or an oil passage) for transmitting the operational force of the clutch pedal 13 to the clutch 2. The clutch operation passage 23 is arranged in parallel to the clutch operation passage 22 and is provided independently therefrom. The clutch 2 is operated on a basis of the operational force of either the clutch actuator 21 or the clutch pedal 13 whichever operates the clutch 2 further in the disengagement state. The operation of the electronic control unit 30 is different from that of the first embodiment because of the arrangement of the clutch operation passage 23. The operation of the electronic control unit 30 according to the third embodiment will be explained later. Other structures of the third embodiment are the same as those of the first embodiment.

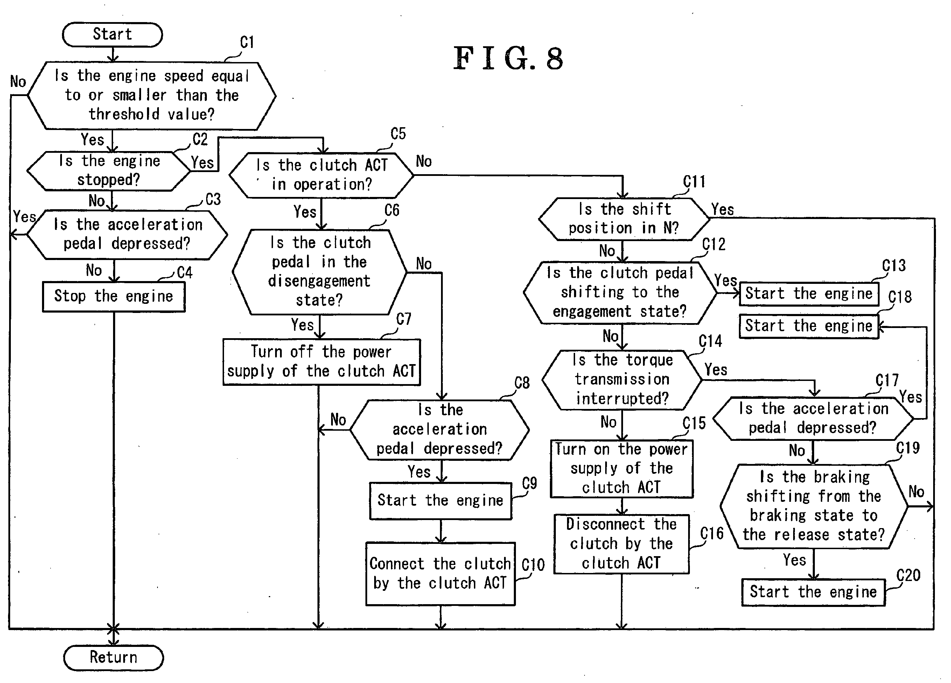

Next, the operation of the automatic stop and start control system for the internal combustion engine according to the third embodiment will be explained with reference to Fig. 8. Fig. 8 is a flowchart schematically illustrating the operation of the automatic stop and start control system for the internal combustion engine according to the third embodiment.

The electronic control unit 30 determines whether or not the detected engine speed is equal to or smaller than the predetermined threshold value in step C1. In a case where the engine speed is greater than the threshold value, the flow operation returns to step C1 (i.e., the flow operation repeats step C1). Step C1 is equal to step A1 in Fig. 2.

In a case where the engine speed is equal to or smaller than the threshold value (Yes in step C1), the electronic control unit 30 determines whether or not the engine 1 is stopped in step C2. When the engine 1 is stopped (Yes in step C2), the flow operation proceeds to step C5. Step C2 is equal to step A2 in Fig. 2.

When the engine 1 is not stopped (No in step C2), the electronic control unit 30 determines whether or not the acceleration pedal 15 is depressed in step C3. In a case where the acceleration pedal 15 is depressed (Yes in step C3), the flow operation returns to step C1. Step C3 is equal to step A3 in Fig. 2.

In a case where the acceleration pedal 15 is not depressed (No in step C3), the electronic control unit 30 controls the engine 1 to stop in step C4. After the engine 1 stops, the flow operation returns to step C1. Step C4 is equal to step A4 in Fig. 2.

In a case where the engine 1 is stopped (Yes in step C2), the electronic control unit 30 determines whether or not the clutch actuator 21 is in operation in step C5. In a case where the clutch actuator 21 is not in operation (No in step C5), the flow operation proceeds to step C11.

In a case where the clutch actuator 21 is in operation (Yes in step C5), the electronic control unit 30 determines whether or not the clutch pedal 13 is in the disengagement state in step C6. In a case where the clutch pedal 13 is in the disengagement state (No in step C6), the flow operation proceeds to step C8.

In a case where the clutch pedal 13 is in the disengagement state (Yes in step C6), the electronic control unit 30 controls a power supply of the clutch actuator 21 to be turned off in step C7. The flow operation thereafter returns to step C1.

In a case where the clutch pedal 13 is not in the disengagement state (No in step C6), the electronic control unit 30 then determines whether or not the acceleration pedal 15 is depressed in step C8. In a case where the acceleration pedal 15 is not depressed (No in step C8), the flow operation returns to step C1.

In a case where the acceleration pedal 15 is depressed (Yes in step C8), the electronic control unit 30 controls the engine 1 and the starter motor 4 so as to start the engine 1 in step C9. After the start of the engine 1, the flow operation proceeds to step C10.

After the operation in step C9, the electronic control unit 30 controls the clutch actuator 21 so that the clutch 2 is shifting from the disconnection state to the connection state in step C10. After the clutch 2 is brought in the connection state, the flow operation returns to step C1.

In a case where the clutch actuator 21 is not in operation (No in step C5), the electronic control unit 30 determines whether or not the detected shift position of the transmission 3 is in the neutral range in step C11. In a case where the shift position is in the neutral range (Yes in step C11), the flow operation returns to step C1. Step C11 is equal to step A5 in Fig. 2.

In a case where the shift position is not in the neutral range (No in step C11), the electronic control unit 30 determines whether or not the clutch pedal 13 is shifting to the engagement state based on the detected stroke of the clutch pedal 13. In a case where the clutch pedal 13 is not shifting to the engagement state (No in step C12; the clutch pedal 13 is maintained in the disengagement state or the engagement state), the flow operation proceeds to step C14. Step C12 is equal to step A6 in Fig. 2.

In a case where the clutch pedal 13 is shifting to the engagement state, (Yes in step C12) the electronic control unit 30 controls the engine 1 and the starter motor 4 so as to start the engine 1 in step C13. After the start of the engine 1, the flow operation is terminated. Step C13 is equal to step A7 in Fig. 2.

In a case where the clutch pedal 13 is not shifting to the engagement state (No in step C12), the electronic control unit 30 determines whether or not the transmission of the rotational torque from the engine 1 to the transmission 3 is interfered by the clutch 2 in step C14. In a case where the torque transmission is interfered by the clutch 2 (Yes in step C14), the flow operation proceeds to step C17. Step C14 is equal to step A8.

In a case where the torque transmission from the engine 1 to the transmission 3 is not interfered by the clutch 2 (No in step C14), the electronic control unit 30 controls the power supply of the clutch actuator 21 to be turned on in step C15. The flow operation thereafter proceeds to step C16.

After the operation in step C15, the electronic control unit 30 controls the clutch actuator 21 so that the clutch 2 is brought in the disconnection state in step C16. After the clutch 2 is brought in the disconnection state, the flow operation returns to step C1. Step C16 is equal to step A9 in Fig. 2.

In a case where the torque transmission is interfered by the clutch 2 (Yes in step C14), the electronic control unit 30 determines whether or not the acceleration pedal 15 is depressed in step C17. When the acceleration pedal 15 is not depressed (No in step C17), the flow operation proceeds to step C19. Step C17 is equal to step A10 in Fig. 2.

In a case where the acceleration pedal 15 is depressed (Yes in step C17), the electronic control unit 30 controls the engine 1 and the starter motor 4 so as to start the engine 1 in step C18. After the start of the engine 1, the flow operation is terminated.

In a case where the acceleration pedal 15 is not depressed (No in step C17), the electronic control unit 30 determines whether or not the braking of the vehicle is shifting from the braking state to the release state in step C19. In a case where the braking of the vehicle is not shifting from the braking state to the release state (No in step C19), the flow operation returns to step C1.

In a case where the braking of the vehicle is shifting from the braking state to the release state (Yes in step C19), the electronic control unit 30 controls the engine 1 and the starter motor 4 so as to start the engine 1. After the start of the engine 1, the flow operation is terminated.

According to the third embodiment, the same effect as that of the first embodiment will be obtained.

### [Fourth embodiment]

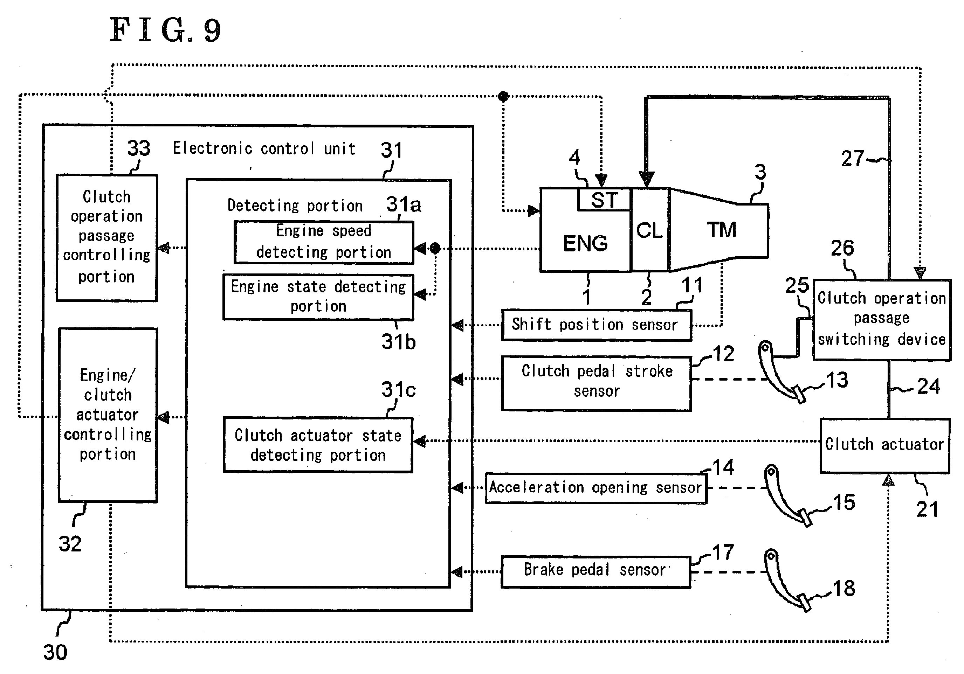

The automatic stop and start control system for the internal combustion engine according to a fourth embodiment will be explained with reference to Fig. 9. Fig. 9 is a schematic view illustrating a structure of the automatic stop and start control system for the internal combustion engine according to the fourth embodiment.

The fourth embodiment that is a modification of the third embodiment includes a clutch operation passage switching device 26 serving as a switching device and arranged between clutch operation passages 24, 25 and 27 so as to select either an operation from the clutch actuator 21 or an operation from the clutch pedal 13.

The clutch operation passage 24 is a passage (i.e., a mechanism or an oil passage) for transmitting an operational power of the clutch actuator 21 to the clutch operation passage switching device 26. The clutch operation passage 25 is a passage (i.e., a mechanism or an oil passage) for transmitting an operational power of the clutch pedal 13 to the clutch operation passage switching device 26. The clutch operation passage 27 is a passage (i.e., a mechanism or an oil passage) for transmitting an operational power of the clutch operation passage switching device 26 to the clutch 2.

The clutch operation passage switching device 26 chooses and switches the passage connected to the clutch operation passage 27 between the clutch operation passage 24 and the clutch operation passage 25. The clutch operation passage switching device 26 is communicably connected to the electronic control unit 30 and is controlled by the electronic control unit 30.

The electronic control unit 30 includes a clutch operation passage controlling portion 33 controlling an operation of the clutch operation passage switching device 26. The clutch operation passage controlling portion 33 performs information processing based on information related to the state of the vehicle sent from the detecting portion 31. A control signal based on the aforementioned information processing is output to the clutch operation passage switching device 26 from the clutch operation passage controlling portion 33. The clutch operation passage controlling portion 33 controls the clutch operation passage switching device 26 so that the clutch operation passage 25 for the transmission of the operational force of the clutch pedal 13 is connected to the clutch operation passage 27 in a case where a power supply of the clutch actuator 21 is turned off, for example. In addition, the clutch operation passage controlling portion 33 controls the clutch operation passage switching device 26 so that the clutch operation passage 24 for the transmission of the operational force of the clutch actuator 21 is connected to the clutch operation passage 27 in a case where the power supply of the clutch actuator 21 is turned on, for example.

Other structures of the fourth embodiment are the same as those of the third embodiment.

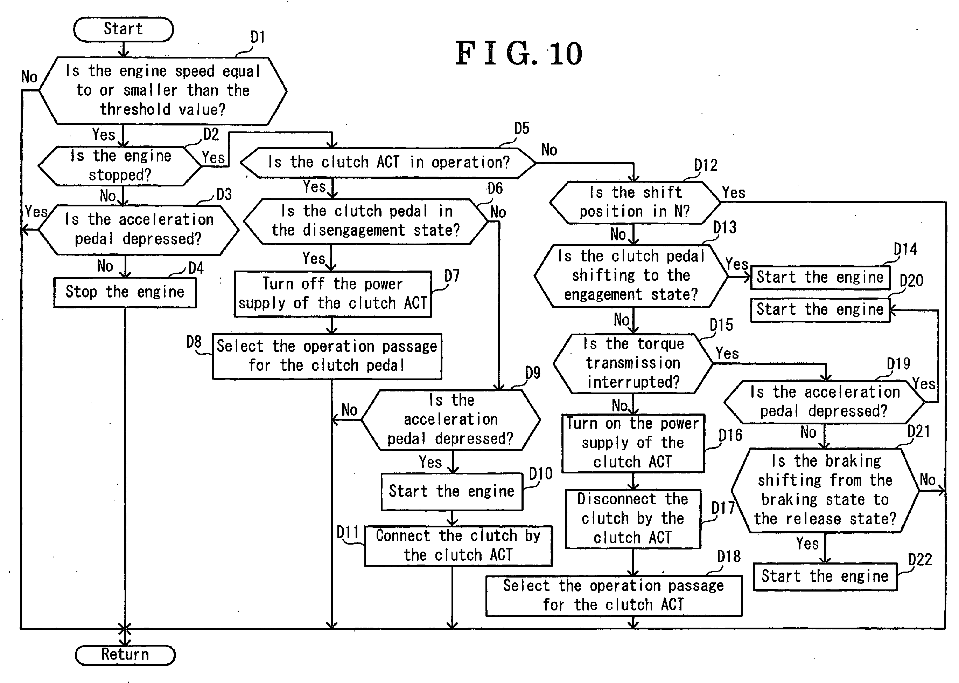

Next, the operation of the automatic stop and start control system for the internal combustion engine according to the fourth embodiment will be explained with reference to Fig. 10. Fig. 10 is a flowchart schematically illustrating the operation of the automatic stop and start control system for the internal combustion engine according to the fourth embodiment.

First, the electronic control unit 30 determines whether or not the detected engine speed is equal to or smaller than the predetermined threshold value in step D1. In a case where the engine speed is greater than the threshold value (No in step D1), the flow operation returns to step D1 (i.e., the flow operation repeats step D1). Step D1 is equal to step C1 in Fig. 8.

In a case where the engine speed is equal to or smaller than the threshold value (Yes in step D1), the electronic control unit 30 determines whether or not the engine 1 is stopped in step D2. When the engine 1 is stopped (Yes in step D2), the flow operation proceeds to step D5. Step D2 is equal to step C2.

In a case where the engine 1 is not stopped (No in step D2), the electronic control unit 30 determines whether or not the acceleration pedal 15 is depressed in step D3. When the acceleration pedal 15 is not depressed (Yes in step D3), the flow operation returns to step D1. Step D3 is equal to step C3.

In a case where the acceleration pedal 15 is not depressed (No in step D3), the electronic control unit 30 controls the engine 1 to stop in step D4. After the engine 1 stops, the flow operation returns to step D1. Step D4 is equal to step C4 in Fig. 8.

In a case where the engine 1 is stopped (Yes in step D2), the electronic control unit 30 determines whether or not the clutch actuator 21 is in operation in step D5. When the clutch actuator 21 is not in operation (No in step D5), the flow operation proceeds to step D12. Step D5 is equal to step C5 in Fig. 8.

In a case where the clutch actuator 21 is in operation (Yes in step D5), the electronic control unit 30 then determines whether or not the clutch pedal 13 is in the disengagement state in step D6. When the clutch pedal 13 is not in the disengagement state (No in step D6), the flow operation proceeds to step D9. Step D6 is equal to step C6 in Fig. 8.

In a case where the clutch pedal 13 is in the disengagement state (Yes in step D6), the electronic control unit 30 controls the power supply of the clutch actuator 21 to be turned off in step D7. The flow operation thereafter proceeds to step D8.

After the operation of step D7, the electronic control unit 30 controls the clutch operation passage switching device 26 so that the clutch operation passage 25 for the transmission of the operational force of the clutch pedal 13 is connected to the clutch operation passage 27 in step D8. The flow operation thereafter returns to step D1.

In a case where the clutch pedal 13 is not in the disengagement state (No in step D6), the electronic control unit 30 then determines whether or not the acceleration pedal 15 is depressed in step D9. When the acceleration pedal 15 is not depressed (No in step D9), the flow operation returns to step D1. Step D9 is equal to step C8 in Fig. 8.

In a case where the acceleration pedal 15 is depressed (Yes in step D9), the electronic control unit 30 controls the engine 1 and the starter motor 4 so as to start the engine 1 in step D10. After the start of the engine 1, the flow operation proceeds to step D11. Step D10 is equal to step C9 in Fig. 8.

After the operation in step D10, the electronic control unit 30 controls the clutch actuator 21 so that the clutch 2 is shifting from the disconnection state to the connection state in step D11. After the clutch 2 is brought in the connection state, the flow operation returns to step D1. Step D11 is equal to step C10 in Fig. 8.

In a case where the clutch actuator 21 is not in operation (No in step D5), the electronic control unit 30 then determines whether or not the detected shift position of the transmission 3 is in the neutral range in step D12. When the shift position is in the neutral range (Yes in step D12), the flow operation returns to step D1. Step D12 is equal to step C11 in Fig. 8.

In a case where the shift position is not in the neutral range (No in step D12), the electronic control unit 30 then determines whether or not the clutch pedal 13 is shifting to the engagement state based on the detected stroke of the clutch pedal 13 in step D13. When the clutch pedal 13 is not shifting to the engagement state (No in step D13; the clutch pedal 13 is maintained in the disengagement state or the engagement state), the flow operation proceeds to step D15. Step D13 is equal to step C12 in Fig. 8.

In a case where the clutch pedal 13 is shifting to the engagement state (Yes in step D13), the electronic control unit 30 controls the engine 1 and the starter motor 4 so as to start the engine 1 in step D14. After the start of the engine 1, the flow operation is terminated. Step D14 is equal to step C13 in Fig. 8.

In a case where the clutch pedal 13 is not shifting to the engagement state (No in step D13), the electronic control unit 30 then determines whether or not the torque transmission from the engine 1 to the transmission 3 is interfered by the clutch 2 based on the detected stroke of the clutch pedal 13 in step D15. When the torque transmission is interfered by the clutch 2 (Yes in step D15), the flow operation proceeds to step D19. Step D15 is equal to step C14 in Fig. 8.

In a case where the torque transmission is not interfered by the clutch 2 (No in step D15), the electronic control unit 30 controls the power supply of the clutch actuator 21 to be turned on in step D16. The flow operation thereafter proceeds to step D17. Step D16 is equal to step C15 in Fig. 8.

After the operation in step D16, the electronic control unit 30 controls the clutch actuator 21 so that the clutch 2 is brought in the disconnection state in step D17. After the clutch 2 is brought in the disconnection state, the flow operation proceeds to step D18. Step D17 is equal to step C16 in Fig. 8.

After the operation of step D17, the electronic control unit 30 controls the clutch operation passage switching device 26 so that the clutch operation passage 24 for the transmission of the operational force of the clutch actuator 21 is connected to the clutch operation passage 27 in step D18. The flow operation thereafter returns to step D1.

In a case where the torque transmission is interfered by the clutch 2 (Yes in step D15), the electronic control unit 30 then determines whether or not the acceleration pedal 15 is depressed in step D19. When the acceleration pedal 15 is not depressed (No in step D19), the flow operation proceeds to step D21. Step D19 is equal to step C17 in Fig. 8.

In a case where the acceleration pedal 15 is depressed (Yes in step D19), the electronic control unit 30 controls the engine 1 and the starter motor 4 so as to start the engine 1 in step D20. After the start of the engine 1, the flow operation is terminated. Step D20 is equal to step C18 in Fig. 8.

In a case where the acceleration pedal 15 is not depressed (No in step D19), the electronic control unit 30 then determines whether or not the braking of the vehicle is shifting from the braking state to the release state in step D21. When the braking of the vehicle is not shifting from the braking state to the release state (No in step D21), the flow operation returns to step D1.

In a case where the braking of the vehicle is shifting from the braking state to the release state (Yes in step D21), the electronic control unit 30 controls the engine 1 and the starter motor 4 so as to start the engine 1 in step D22. After the start of the engine 1, the flow operation is terminated.

According to the fourth embodiment, the same effect as that of the third embodiment will be obtained.

### [Fifth embodiment]

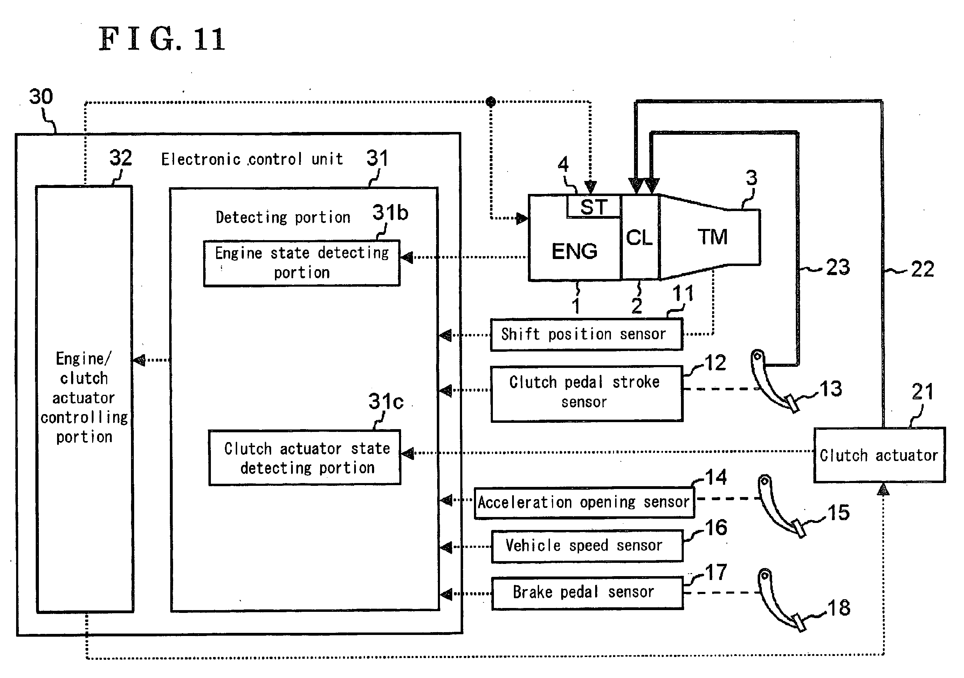

The automatic stop and start control system for the internal combustion engine according to a fifth embodiment will be explained with reference to Fig. 11. Fig. 11 is a schematic view illustrating a structure of the automatic stop and start control system for the internal combustion engine according to the fifth embodiment.

According to the fifth embodiment that is a modification of the third embodiment, the vehicle speed is utilized instead of the engine speed. That is, in the fifth embodiment, the detecting portion 31 does not include the engine speed detecting portion. Instead, the detecting portion 31 detects the vehicle speed based on a signal from the vehicle speed sensor 16 and the engine/clutch actuator controlling portion 32 performs information processing based on information related to the vehicle speed. In addition, as in the same way as the third embodiment, the fifth embodiment includes the clutch operation passage 23 through which the clutch 2 is operable by the clutch pedal 13 in addition to the clutch operation passage 22 through which the clutch 2 is operable by the clutch actuator 21. Other structures of the fifth embodiment are the same as those of the third embodiment.

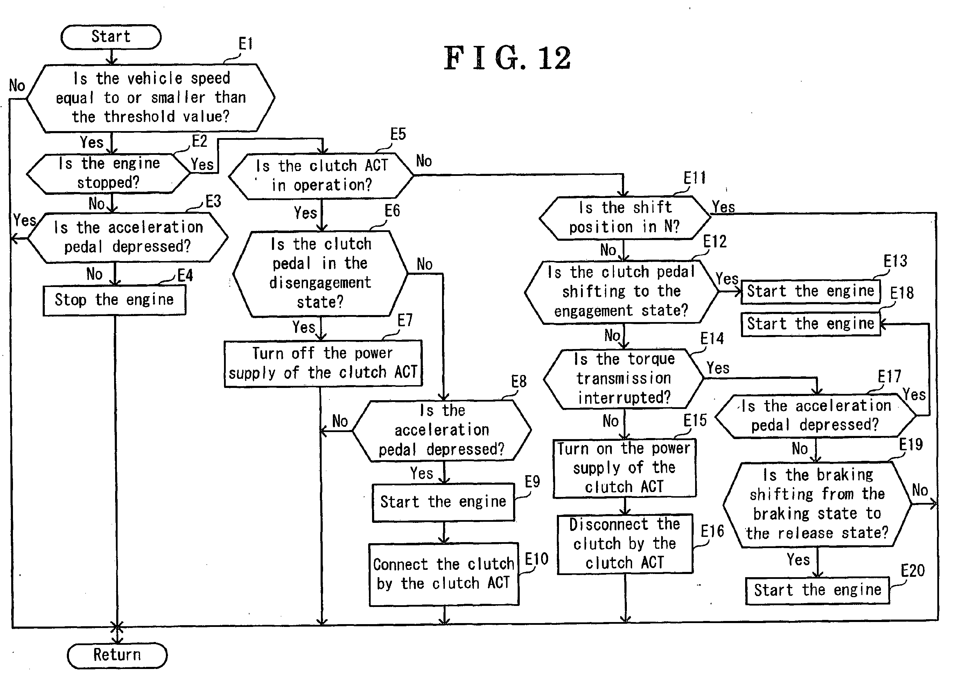

Next, the operation of the automatic stop and start control system for the internal combustion engine according to the fifth embodiment will be explained with reference to Fig. 12. Fig. 12 is a flowchart schematically illustrating the operation of the automatic stop and start control system for the internal combustion engine according to the fifth embodiment.

First, the electronic control unit 30 determines whether or not the detected vehicle speed is equal to or smaller than the predetermined threshold value in step E1. When the vehicle speed is greater than the threshold value (No in step E1), the flow operation returns to step E1 (i.e., the flow operation repeats step E1). The threshold value is desirably defined to be a value at which the engine 1 returns from the fuel cut mode (where the amount of fuel injection is zero) (i.e., the engine 1 is supplied with fuel).

In a case where the vehicle speed is equal to or smaller than the threshold value (Yes in step E1), operations from step E2 to step E20 are the same as those from step C2 to step C20 in Fig. 8 according to the third embodiment.

According to the fifth embodiment, the same effect as that of the third embodiment may be obtained.

### [Sixth embodiment]

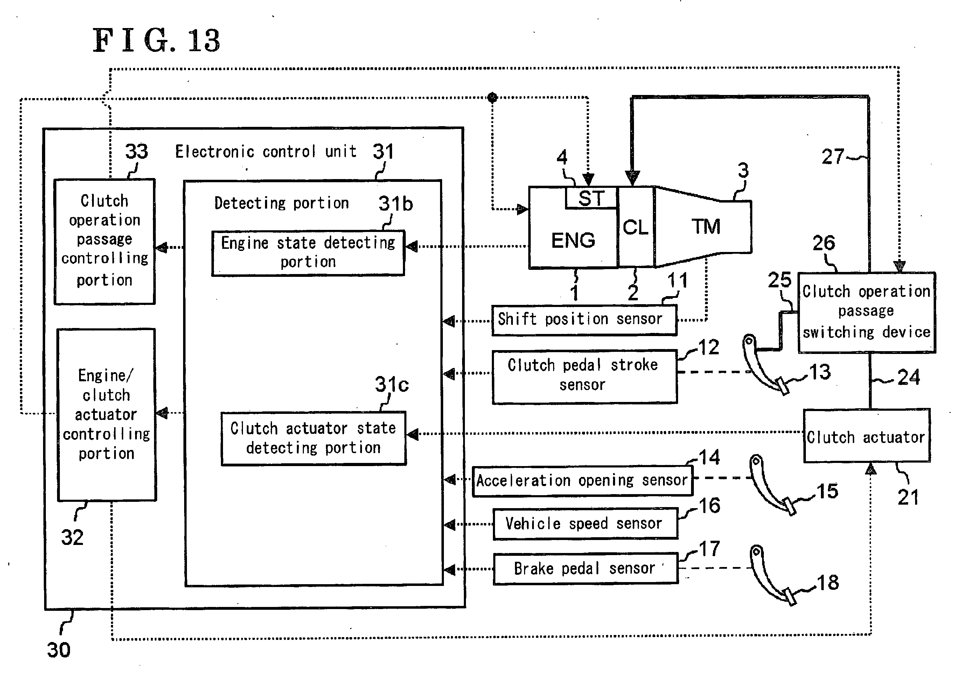

The automatic stop and start control system for the internal combustion engine according to a sixth embodiment will be explained with reference to Fig. 13. Fig. 13 is a schematic view illustrating a structure of the automatic stop and start control system for the internal combustion engine according to the sixth embodiment.

According to the sixth embodiment that is a modification of the fourth embodiment, the vehicle speed is utilized instead of the engine speed. That is, in the sixth embodiment, the detecting portion 31 does not include the engine speed detecting portion. Instead, the detecting portion 31 detects the vehicle speed based on a signal from the vehicle speed sensor 16 and the engine/clutch actuator controlling portion 32 performs information processing based on information related to the vehicle speed. In addition, as in the same way as the fourth embodiment, the sixth embodiment includes the clutch operation passage switching device 26 serving as the switching device and arranged between the clutch operation passages 24, 25 and 27 so as to select either an operation from the clutch actuator 21 or an operation from the clutch pedal 13. Other structures of the sixth embodiment are the same as those of the fourth embodiment.

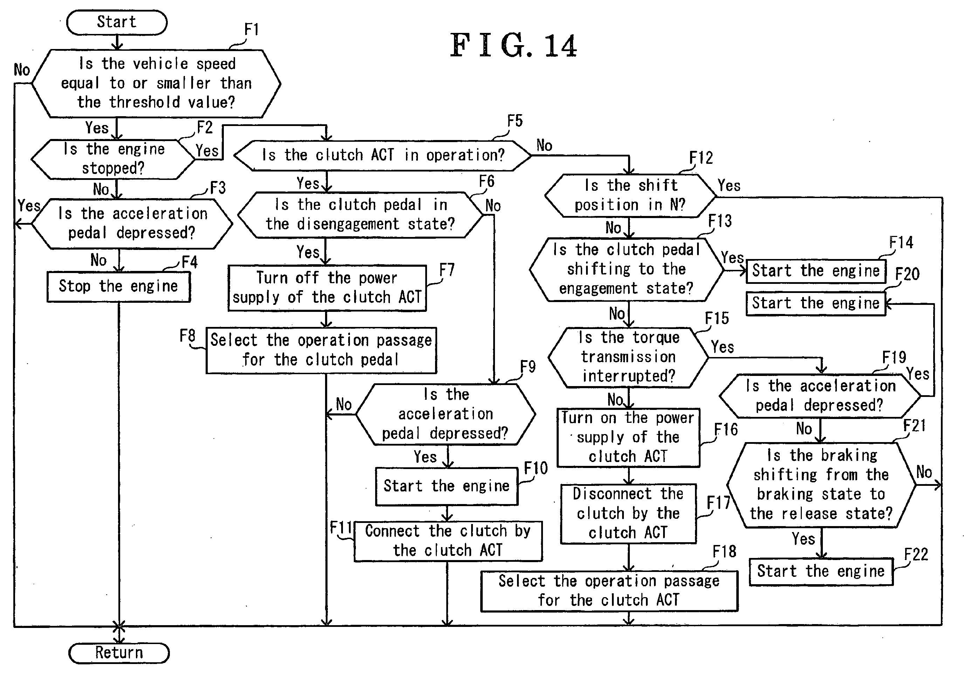

Next, the operation of the automatic stop and start control system for the internal combustion engine according to the sixth embodiment will be explained with reference to Fig. 14. Fig. 14 is a flowchart schematically illustrating the operation of the automatic stop and start control system for the internal combustion engine according to the sixth embodiment.

First, the electronic control unit 30 determines whether or not the detected vehicle speed is equal to or smaller than the predetermined threshold value in step F1. When the vehicle speed is greater than the threshold value (No in step F1), the flow operation returns to step F1 (i.e., the flow operation repeats step F1). The threshold value is desirably defined to be a value at which the engine 1 returns from the fuel cut mode (where the amount of fuel injection is zero) (i.e., the engine 1 is supplied with fuel).

In a case where the vehicle speed is equal to or smaller than the threshold value (i.e., No in step F1), operations from step F2 to step F22 are the same as those from step D2 to step D22 in Fig. 10.

According to the sixth embodiment, the same effect as that of the fourth embodiment may be obtained.

## Claims

1. An automatic stop and start control system for an internal combustion engine mounted at a vehicle where a clutch (2) is arranged at a power transmission passage between a transmission (3) and an internal combustion engine (1) that is driven on a basis of an operation of an acceleration pedal (15), the automatic stop and start control system for the internal combustion engine comprising:
a controlling portion (30) controlling the internal combustion engine (1) that is rotating to automatically stop and controlling the internal combustion engine (1) that is stopped to automatically start, the stop condition being satisfied in a case where a speed of the vehicle or a speed of the internal combustion engine (1) is equal to or smaller than a predetermined threshold value that is greater than zero and the acceleration pedal (15) is not depressed,
the controlling portion (30) controlling a clutch actuator (21) provided separately from a clutch pedal (13) that operates the clutch (2) to bring the clutch (2) in a disconnection state in a case where a shift position of the transmission (3) is in a driving range and the clutch (2) is in a connection state after the internal combustion engine (1) is automatically stopped.

2. The automatic stop and start control system for the internal combustion engine according to claim 1, wherein the start condition is satisfied in a case where the shift position of the transmission (3) is in the driving range and the clutch pedal (13) is shifting from a disengagement state to an engagement state after the internal combustion engine (1) is automatically stopped.

3. The automatic stop and start control system for the internal combustion engine according to claim 1, wherein the start condition is satisfied in a case where the shift position of the transmission (3) is in the driving range, the clutch (2) is in the disconnection state, and the acceleration pedal (15) is depressed.

4. The automatic stop and start control system for the internal combustion engine according to claim 1, wherein the start condition is satisfied in a case where the shift position of the transmission (3) is in the driving range, the clutch (2) is in the disconnection state, the acceleration pedal (15) is not depressed, and a braking of the vehicle is shifting from a braking state to a release state.

5. The automatic stop and start control system for the internal combustion engine according to any one of claims 1 through 4, further comprising an operation passage (22) between the clutch (2) and the clutch actuator (21) to transmit an operational force of the clutch actuator (21) to the clutch (2), wherein the operation passage (22) is prevented from being provided between the clutch (2) and the clutch pedal (13) for transmitting an operational force of the clutch pedal (13) to the clutch (2).

6. The automatic stop and start control system for the internal combustion engine according to any one of claims 1 through 4, further comprising an operation passage (22) between the clutch (2) and the clutch actuator (21) to transmit an operational force of the clutch actuator (21) to the clutch (2) and an operation passage (23) between the clutch (2) and the clutch pedal (13) to transmit an operational force of the clutch pedal (13) to the clutch (2), wherein the clutch (2) is operated on a basis of the operational force of either the clutch actuator (21) or the clutch pedal (13) whichever operates the clutch (2) further in a disengagement state.

7. The automatic stop and start control system for the internal combustion engine according to any one of claims 1 through 4, further comprising a switching device (26) that switches between operation passages (24, 25) to transmit an operational force of either the clutch pedal (13) or the clutch actuator (21) to the clutch (2), wherein the switching device (26) connects the clutch pedal (13) to the clutch (2) in a case where a power supply of the clutch actuator (21) is turned off and connects the clutch actuator (21) to the clutch (2) in a case where the power supply of the clutch actuator (21) is turned on.

## Patentansprüche

1. Automatisches Stopp-Start-Steuersystem für eine an einem Fahrzeug montierte Brennkraftmaschine, wobei eine Kupplung (2) in einem Leistungsübertragungspfad zwischen einem Getriebe (3) und einer basierend auf einer Betätigung eines Gaspedals (15) betriebenen Brennkraftmaschine (1) angeordnet ist, welches automatische Stopp-Start-Steuersystem für die Brennkraftmaschine enthält:
einen Steuerteil (30), der die Brennkraftmaschine (1), die dreht, steuert, um automatisch zu stoppen, und die Brennkraftmaschine (1), die gestoppt ist, steuert, um automatisch zu starten, wobei die Stoppbedingung in einem Fall erfüllt ist, in dem eine Geschwindigkeit des Fahrzeugs oder eine Drehzahl der Brennkraftmaschine (1) gleich oder kleiner als ein vorbestimmter Schwellwert ist, der größer als Null ist, und das Gaspedal (15) nicht gedrückt ist,
der Steuerteil (30) einen getrennt von dem Kupplungspedal (13) vorhandenen Kupplungsaktor (21) steuert, der die Kupplung (2) betätigt, um die Kupplung (2) in einen Ausrückzustand in einem Fall zu bringen, in dem eine Schaltstellung des Getriebes (3) in einem Fahrbereich ist und die Kupplung (2) in einem Einrückzustand ist, nachdem die Brennkraftmaschine (1) automatisch gestoppt ist.

2. Automatisches Stopp-Start-Steuersystem für die Brennkraftmaschine nach Anspruch 1, wobei die Startbedingung in einem Fall erfüllt ist, in dem die Schaltstellung des Getriebes (3) in dem Fahrbereich ist und das Kupplungspedal (13) sich von einem Ausrückzustand in einen Einrückzustand bewegt, nachdem die Brennkraftmaschine (1) automatisch gestoppt ist.

3. Automatisches Stopp-Start-Steuersystem für die Brennkraftmaschine nach Anspruch 1, wobei die Startbedingung in einem Fall erfüllt ist, in dem die Schaltstellung des Getriebes (3) in dem Fahrbereich ist, die Kupplung (2) in dem Ausrückzustand ist und das Gaspedal (15) gedrückt ist.

4. Automatisches Stopp-Start-Steuersystem für die Brennkraftmaschine nach Anspruch 1, wobei die Startbedingung in einem Fall erfüllt ist, in dem die Schaltposition des Getriebes (3) in dem Fahrbereich ist, die Kupplung (2) in dem Ausrückzustand ist, das Gaspedal (15) nicht gedrückt ist und eine Bremse des Fahrzeugs sich von einem Bremszustand in einen Freigabezustand verändert.

5. Automatisches Stopp-Start-Steuersystem für die Brennkraftmaschine nach einem der Ansprüche 1 bis 4, weiter enthaltend einen Betätigungspfad (22) zwischen der Kupplung (2) und dem Kupplungsaktor (21) zum Übertragen einer Betätigungskraft des Kupplungsaktors (21) auf die Kupplung (2), wobei der Übertragungspfad (22) daran gehindert ist, zwischen der Kupplung (2) und dem Kupplungspedal (13) zum Übertragen einer Betätigungskraft von dem Kupplungspedal (13) auf die Kupplung (2) vorhanden zu sein.

6. Automatisches Stopp-Start-Steuersystem für die Brennkraftmaschine nach einem der Ansprüche 1 bis 4, weiter enthaltend einen Betätigungspfad (22) zwischen der Kupplung (2) und dem Kupplungsaktor (21) zum Übertragen einer Betätigungskraft des Kupplungsaktors (21) auf die Kupplung (2) und einen Betätigungspfad (23) zwischen der Kupplung (2) und dem Kupplungspedal (13) zum Übertragen einer Betätigungskraft des Kupplungspedals (13) auf die Kupplung (2), wobei die Kupplung (2) basierend auf der Betätigungskraft des Kupplungsaktors (21) oder des Kupplungspedals (13) betätigt wird, wer immer die Kupplung (2) weiter in einen Ausrückzustand betätigt.

7. Automatisches Stopp-Start-Steuersystem für die Brennkraftmaschine nach einem der Ansprüche 1 bis 4, weiter enthaltend eine Schaltvorrichtung (26), die zwischen Betätigungspfaden (24, 25) schaltet, um eine Betätigungskraft entweder des Kupplungspedals (13) oder des Kupplungsaktors (21) auf die Kupplung (2) zu übertragen, wobei die Schaltvorrichtung (26) das Kupplungspedal (13) mit der Kupplung (2) in einem Fall verbindet, in dem eine Energiezufuhr des Kupplungsaktors (21) abgeschaltet ist, und den Kupplungsaktor (21) mit der Kupplung (2) in einem Fall verbindet, in dem die Energiezufuhr des Kupplungsaktors (21) angeschaltet ist.

## Revendications

1. Système de contrôle automatique d'arrêt et de démarrage pour un moteur à combustion interne monté sur un véhicule où un embrayage (2) est disposé à un passage de transmission de puissance entre une transmission (3) et un moteur à combustion interne (1) qui est entrainé sur une base d'une opération d'une pédale d'accélérateur (15), le système de contrôle automatique d'arrêt et de démarrage pour un moteur à combustion interne comprenant :
- une partie de contrôle (30) contrôlant le moteur à combustion interne (1) qui est en rotation pour l'arrêter automatiquement et contrôlant le moteur à combustion interne (1) qui est à l'arrêt pour le démarrer automatiquement, la condition d'arrêt étant satisfaite dans le cas où une vitesse du véhicule ou une vitesse du moteur à combustion interne (1) est égale à ou plus petite qu'une valeur de seuil prédéterminée qui est plus grande que zéro et la pédale d'accélération (15) n'est pas enfoncée,
- la partie de contrôle (3a) contrôlant un actionneur d'embrayage (21) fourni séparément d'une pédale d'embrayage (13) qui contrôle l'embrayage (2) pour amener l'embrayage (2) dans un état de déconnexion dans le cas où une position de changement de la transmission (3) est dans une plage d'entrainement et l'embrayage (2) est dans un état de connexion après que le moteur à combustion interne (1) est automatiquement stoppé.

2. Système de contrôle automatique d'arrêt et de démarrage pour un moteur à combustion interne selon la revendication 1, dans lequel la condition de démarrage est satisfaite dans le cas où la position de changement de la transmission (3) est dans la plage d'entrainement et la pédale d'embrayage (13) est changée à partir un état de désengagement jusqu'à un état d'engagement après que le moteur à combustion interne (1) est automatiquement stoppé.

3. Système de contrôle automatique d'arrêt et de démarrage pour un moteur à combustion interne selon la revendication 1, dans lequel la condition de démarrage est satisfaite dans le cas où la position de changement de la transmission (3) est dans la plage d'entrainement, l'embrayage (2) est dans l'état de déconnection, et la pédale d'accélération (15) est enfoncée.

4. Système de contrôle automatique d'arrêt et de démarrage pour un moteur à combustion interne selon la revendication 1, dans lequel la condition de démarrage est satisfaite dans le cas où la position de la transmission (3) est dans la plage d'entrainement, l'embrayage (2) est dans l'état de déconnexion, la pédale d'accélération (15) n'est pas enfoncée, et un frein de véhicule est changé depuis un état de freinage jusqu'à un état de libération.

5. Système de contrôle automatique d'arrêt et de démarrage pour un moteur à combustion interne selon l'une quelconque des revendications 1 à 4, comprenant en outre un passage d'opération (22) entre l'embrayage (2) et l'actionneur d'embrayage (21) pour transmettre une force opérationnelle de l'actionneur d'embrayage (21) à l'embrayage (2), dans lequel le passage d'opération (22) est empêché d'être amené entre l'embrayage (2) et la pédale d'embrayage (13) pour transmettre une force opérationnelle de la pédale d'embrayage (13) à l'embrayage (2).

6. Système de contrôle automatique d'arrêt et de démarrage pour un moteur à combustion interne selon l'une quelconque des revendications 1 à 4, comprenant en outre un passage d'opération (22) entre l'embrayage (2) et l'actionneur d'embrayage (21) pour transmettre une force opérationnelle de l'actionneur d'embrayage (21) à l'embrayage (2) et un passage d'opération (23) entre l'embrayage (2) et la pédale d'embrayage (13) pour transmettre une force opérationnelle de la pédale d'embrayage (13) à l'embrayage (2), dans lequel l'embrayage est commandé sur une base d'une force opérationnelle de soit l'actionneur d'embrayage (21) soit de la pédale d'embrayage (13) laquelle des deux amène l'embrayage (2) ensuite dans un état de désengagement.

7. Système de contrôle automatique d'arrêt et de démarrage pour un moteur à combustion interne selon l'une quelconque des revendications 1 à 4, comprenant en outre un dispositif de commutation (26) qui connecte entre des passages d'opération (24, 25) pour transmettre une force opérationnelle soit de la pédale d'embrayage (13) soit de l'actionneur d'embrayage (21) à l'embrayage (2), dans lequel le dispositif de commutation (26) connecte la pédale d'embrayage (13) à l'embrayage (2) dans le cas où une source de puissance de l'actionneur d'embrayage (21) est éteinte et connecte l'actionneur d'embrayage (21) à l'embrayage (2) dans le cas où la source de puissance de l'actionneur d'embrayage (21) est branchée.
